# EUROPEAN PATENT APPLICATION

(11) **EP 4 265 397 A1**
(43) Date of publication of application: **25.10.2023**
(21) Application number: 22169069.6
(22) Date of filing: 20.04.2022
(51) Int. Cl.: B29C 64/124, B29C 64/153, B29C 64/20, B29C 64/379, B29C 64/393, B33Y 10/00, B33Y 30/00, B33Y 40/00, B33Y 50/02, B33Y 70/00, B33Y 80/00, B22F 10/28

(54) **3D PRINTER AND METHOD OF PRINTING**

(30) Priority: 19.04.2022 TR 202206212
(71) Applicant: Vestel Elektronik Sanayi ve Ticaret A.S., 45030 Manisa (TR)
(72) Inventor: KIRISKEN, Barbaros, Manisa (TR)
(74) Representative: Page White Farrer

(57) **Abstract**

Using additive manufacturing processing of a substrate material, one or more layers of a 3D object (18) are formed from the substrate material. The layers are formed with a region (32) for receiving an insert (24). Using a robotic arm (22), an insert (24) is placed into the region (32) such that at least a portion of the insert (24) is located in the region (32). Then, one or more further layers of the 3D object (18) are formed over the insert (24) such that the insert (24) is contained by the 3D object (18).

## Description

### Technical Field

The present disclosure relates to a method of printing a 3D object and to a 3D printer.

### Background

3D printing concerns printing of three dimensional objects. A number of different 3D printing technologies are known.

One category of 3D printing uses extrusion processes in which the substrate material, often in the form of a continuous filament of a thermoplastic material as a base material, is fed through a moving heated printer extruder head. The molten material is forced out of a nozzle of the extruder head and is deposited onto a 3D printing platform. A first layer of the object is formed by curing that deposited material. The extruder head is then moved up and the process repeated as necessary to form the next layers of the object. Another category of 3D printing uses printer heads which are analogous to ink jet printer heads and which dispense the substrate in the form of small droplets, to build up the object layer by layer.

On the other hand, another broad category of 3D printing uses a container of a substrate in liquid or powder form. The substrate is locally cured layer by layer. The formed solid layers of the object which is being printed are moved relatively up or down (depending on whether the object is being formed "bottom up" or "top down") after curing to expose the next uncured layer which is then cured until the object has been fully formed. One specific example is generally known as vat photopolymerization in which the substrate material is a liquid photopolymer contained in a vat which is locally cured layer by layer. Various specific vat photopolymerization 3D printing technologies are known. Another specific example is generally known as powder bed fusion, in which powder particles are fused locally layer-by-layer. In either case, typically a heat source or a light source is used to locally cure the substrate. Optionally, curing agents are also applied to promote curing and/or to provide greater detail in the formed object. These vat photopolymerization and particularly powder bed fusion techniques are capable of printing a 3D object with high precision, allowing accurate and detailed 3D objects to be formed.

There are many objects which require some insert to be included. The insert may be of a different material from the base object. As just one example, it may be desirable to fit metal inserts into a plastics object. The metal inserts may be for example screw threaded metal sockets to receive mounting screws or metal retainers to receive other types of fasteners. This is straightforward and common in injection moulding. However, this is simply not possible or cannot be done accurately with many 3D printing techniques, and so the insert has to be fitted after the 3D object has been fully formed. This is time consuming and adds to the manufacturing cost, and so is not suited for manufacturing processes, including particularly industrial manufacturing processes.

### Summary

According to a first aspect disclosed herein, there is provided a method of printing a 3D object containing an insert using additive manufacturing processing of a substrate material, the method comprising:
using additive manufacturing processing of a substrate material, forming one or more layers of a 3D object from the substrate material, said layers being formed with a region for receiving an insert;
using a robotic arm, placing an insert into said region such that at least a portion of the insert is located in said region;
using additive manufacturing processing of the substrate material, forming one or more further layers of the 3D object, the further layers being formed over the insert such that the insert is contained by the 3D object.

In an example, said region is formed by depositing one or more layers of the substrate material in an uncured state and curing said one or more layers of the substrate material other than at said region, such that when the robotic arm places the insert in said region, said region is formed of the uncured portion of the substrate material.

In an example, the comprises detecting the location of said region prior to placing the insert into said region, and controlling the robotic arm to place the insert into said region based on the detected location of said region.

In an example, the robotic arm is controlled to pick the insert from a storage location, locate the insert over said region of the 3D object, and release the insert to place the insert in said region.

In an example, the robotic arm has an electromagnetic tip which is controllable to hold and release an insert of magnetic material.

In an example, the robotic arm has a gripper tip which is controllable to hold and release an insert.

In an example, the additive manufacturing processing of the substrate material uses vat photopolymerization in which the substrate material is a liquid photopolymer contained in a tank which is cured by a heat or light source to form the layers.

In an example, the additive manufacturing processing of the substrate material uses powder bed fusion in which the substrate material is a powder contained in a tank and which is fused by a heat or light source to form the layers.

According to a second aspect disclosed herein, there is provided a 3D printer for printing a 3D object containing an insert using additive manufacturing processing of a substrate material, the printer comprising:
a tank for holding a substrate material to be used in additive manufacturing printing a 3D object; and
a robotic arm constructed and arranged to be able to pick and place an insert;
the robotic arm being arranged to be controllable to pick an insert from a storage location and place the insert in said 3D object during printing of said 3D object using additive manufacturing processing of a substrate material contained in the tank in use;
wherein the 3D printer is configured to:
   using additive manufacturing processing of a substrate material, form one or more layers of a 3D object from the substrate material, said layers being formed with a region for receiving an insert;
   using the robotic arm, place an insert into said region such that at least a portion of the insert is located in said region; and
   using additive manufacturing processing of the substrate material, form one or more further layers of the 3D object, the further layers being formed over the insert such that the insert is contained by the 3D object.

In an example, the 3D printer is configured to form said region by depositing one or more layers of the substrate material in an uncured state and curing said one or more layers of the substrate material other than at said region, such that when the robotic arm places the insert in said region, said region is formed of the uncured portion of the substrate material.

In an example, the 3D printer comprises a location detector for detecting the location of said region prior to placing the insert into said region, the robotic arm being controlled to place the insert into said region based on the detected location of said region.

In an example, the robotic arm has an electromagnetic tip which is controllable to hold and release an insert of magnetic material.

In an example, the robotic arm has a gripper tip which is controllable to hold and release an insert.

In an example, the additive manufacturing processing of the substrate material uses vat photopolymerization in which the substrate material is a liquid photopolymer contained in a vat which is cured by a heat or light source.

In an example, the additive manufacturing processing of the substrate material uses powder bed fusion in which the substrate material is a powder contained in a vat which is fused by a heat or light source.

### Brief Description of the Drawings

To assist understanding of the present disclosure and to show how embodiments may be put into effect, reference is made by way of example to the accompanying drawings in which:
Figure 1 shows schematically a first perspective view of an example of a 3D printer according to an embodiment of the present disclosure;
Figure 2 shows schematically a second perspective view of the example of Figure 1;
Figure 3 shows schematically plan view from above of the example of Figure 1; and
Figure 4 shows schematically a perspective view of a 3D object part way though manufacture according to an example of a method of the present disclosure.

### Detailed Description

Examples described herein are particularly suited for use with 3D printing types that use a container of a substrate in liquid or powder form in which the substrate is locally cured layer by layer. The formed solid layers of the object which is being printed are moved relatively up or down (depending on whether the object is being formed "bottom up" or "top down") after curing to expose the next uncured layer which is then cured until the object has been fully formed. As noted above, one specific example is generally known as vat photopolymerization in which the substrate material is a liquid photopolymer contained in a vat which is locally cured layer by layer. Various specific vat photopolymerization 3D printing technologies are known. Another specific example is generally known as powder bed fusion, in which powder particles are fused locally layer-by-layer. In either case, typically a heat source or a light source is used to locally cure the substrate so as to build up the 3D object layer by layer. Optionally, curing agents are also applied to promote curing and/or to provide greater detail in the formed object. These vat photopolymerization and particularly powder bed fusion techniques are capable of printing a 3D object with high precision, allowing accurate and detailed 3D objects to be formed.

As described further herein, in examples, using additive manufacturing processing of a substrate material, one or more layers of a 3D object are formed from the substrate material, said layers being formed with a region for receiving an insert. Using a robotic arm, an insert is placed into said region such that at least a portion of the insert is located in said region. Then, using additive manufacturing processing of the substrate material, one or more further layers of the 3D object are formed, the further layers being formed over the insert such that the insert is contained by the 3D obj ect.

This enables an insert to be formed in the 3D object as the 3D object is formed, so avoiding having to fit the insert after the 3D object has been fully formed or completed. The insert can be located accurately using the robotic arm. The movement of the robotic arm to pick up the insert, place the insert in the region, and move away again to allow curing can be controlled to maximise throughput and to ensure that the insert is positioned accurately at the desired location in the finally formed object.

The region may be formed by depositing one or more layers of the substrate material in an uncured state and curing said one or more layers of the substrate material other than at said region. When the robotic arm places the insert in said region, said region is formed of the uncured portion of the substrate material. Further layers can then be formed, which cover and hold the insert in place. Because the insert is placed in an uncured portion of the substrate material, the uncured portion of the substrate material can be at least partially forced or squeezed out, thus making a space in which the insert can be located. This helps to locate the insert accurately, and also means that the insert is not protruding from the space which could otherwise obstruct a roller or scraper or the like which is laying down or smoothing the next layer of the substrate material.

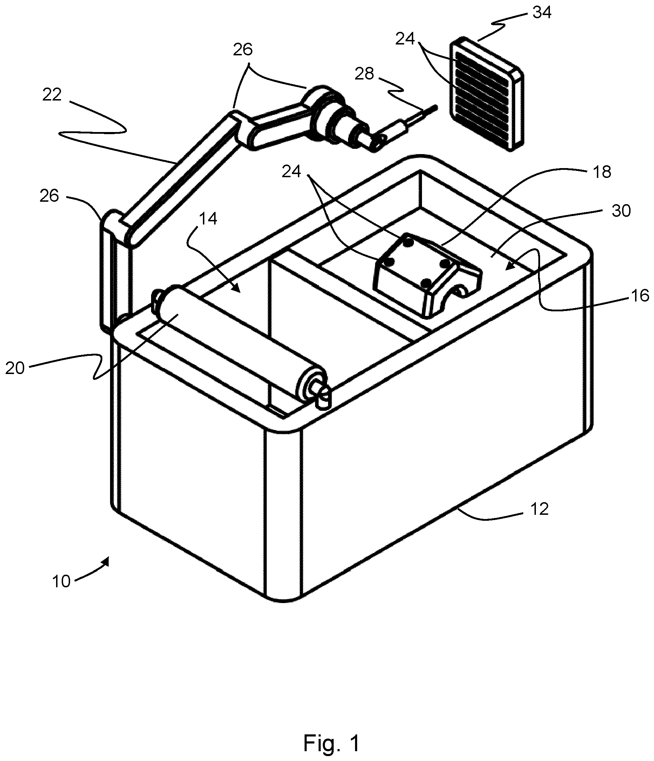

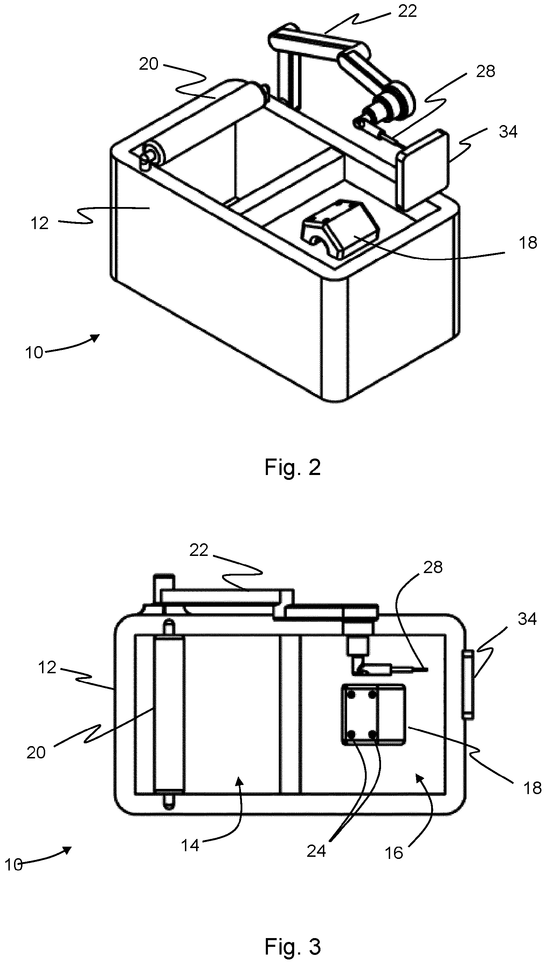

Referring now to the drawings, Figures 1 and 2 shows respectively schematic perspective views and Figure 3 shows a schematic plan view of an example of a 3D printer 10 according to an embodiment of the present disclosure. The specific example of the 3D printer 10 shown is of the powder bed fusion type. In other examples, the 3D printer 10 may be of the vat photopolymerization as similar principles apply in the present context. The 3D printer 10 may nevertheless be of another type in other examples.

The 3D printer 10 has a container 12, commonly referred to as a "bath" or "vat" or the like. The container 12 has two main chambers 14, 16, which are adjacent. The first chamber 14 contains a supply of the uncured substrate, here a supply of the powder. The second chamber 16 is where the 3D object 18 is formed. Whilst the two chambers 14, 16 are shown here as being adjacent parts of a single container 12, in other examples the two chamber 14, 16 may be provided separately. It is noted that it is common in powder bed fusion for the two chambers 14, 16 to be adjacent parts of a single container 12, whereas in vat photopolymerization, it is common for the chamber 14 for the raw, uncured substrate to be located separately from the chamber 16 where the object 18 is formed (that chamber 16 commonly being referred to as the "vat"). A roller 20 or scraper or the like is located over the container 12 and is operated to move back and further between the chambers 14, 16 so as to distribute and spread the uncured substrate from the first chamber 14 to the second chamber 16 as layers are cured to harden in the second chamber 16 to form the object 18. A piston or pump or the like (not shown) can be used to transfer or assist in the transfer of the uncured substrate from the first chamber 14 to the second chamber 16 in a manner known per se. Likewise, a movable platform or the like (not shown) in the second chamber 16 is used to lower the object 18 and uncured substrate in the second chamber 16 between deposition and curing of layers to allow a new layer of uncured substrate to be located over the already cured layers, so that the next layer of the object 18 can be formed by curing. A heat source or a light source (not shown) is located in use over the second chamber 16 and is used to locally cure the substrate in a manner known per se. Alternatively or additionally, curing agents are also applied to promote curing and/or to provide greater detail in the formed object, with the curing agents optionally being applied locally.

A robotic arm 22 is provided for picking up and placing inserts 24 during printing of the object 18. The robotic arm 22 may be connected or mounted to the container 12 or may be provided separately. The robotic arm 22 has one or more articulated and rotary joints 26. This allows the tip 28 of the robotic arm 22 to be moved back and forth over the container 12 and allows the tip 28 to be rotated as necessary as will be further described. The robotic arm 22 may be of the six axis type having six degrees of freedom, which allows the tip 28 to be moved and orientated freely to pick and place inserts 24 in an arbitrary position and orientation. The tip 28 may have an electromagnet and/or a gripper tip or the like, which can be operated to hold and release an insert 24 as desired (an electromagnet being useful when the insert 24 is formed of a magnetic material such as iron or steel, etc.).

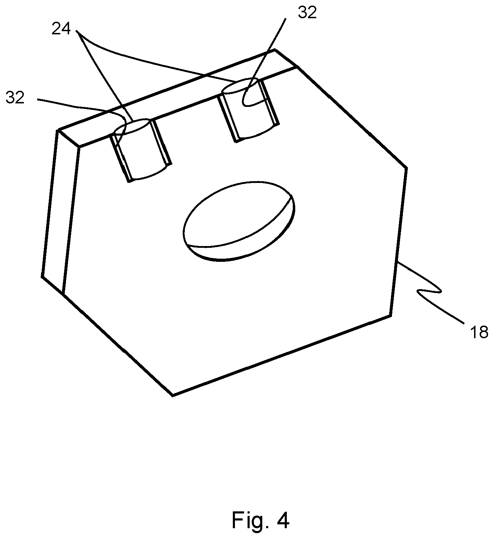

Figures 1 to 3 and Figure 4 show a partially formed object 18 in which inserts 24 have been located. In Figures 1 to 3, the object 18 is in the second chamber 16 shown sitting in a body of uncured substrate 30, which is substrate 30 that has not been cured in previous curing to form successive layers of the object 18.

As is known per se, first, a layer of uncured substrate is transferred from the first chamber 14 to the second chamber 16 and spread out to form an even layer by moving the roller 20 back and forth, usually in one pass of the roller 20. A light source or a heat source, such as a laser, infrared light source, ultraviolet light source, electron beam source, etc. depending on the particular substrate used, is operated to locally cure the substrate in the second chamber 16 to form the first solid layer of the object 18. The platform supporting the first layer of the object 18 and the uncured substrate 30 in the second chamber 16 is lowered. A further amount of uncured substrate is transferred from the first chamber 14 to the second chamber 16 and spread out to form a new even layer of substrate using the roller 20. That new layer of substrate is then locally cured to form the next layer of the object 18. The process is repeated as necessary to form the next layers of the object 18.

As noted above, there are many objects which require some insert to be included. The insert may be of a different material from the base object. As an example, it may be desirable to fit metal inserts into a plastics object. The metal inserts may be for example screw threaded metal sockets to receive mounting screws or metal retainers to receive other types of fasteners.

In an example of the present disclosure, this is achieved as part of the 3D printing of the object 18 as follows.

A number of solid layers of the object 18 are formed, in a manner known per se and described in outline above. Once the object 18 has been formed to the point where an insert 24 is to be located, and particularly where a lower part of the insert 24 is to be located in this example where the curing is top down, then a region 32 is begun to be formed in the current layer, where that region 32 subsequently receives the insert 24. Depending on the size of the insert 24 and the thickness of the solid layers of the object 18 as they are formed, it may be necessary to repeat this for a number of layers so that the region 32 is sufficiently deep and of a shape that is suitable to at least partially receive the insert 24. The formed region 32 may be in the form of a channel or slot which receives the insert 24.

In an example, the region 32 is formed by not curing the substrate at that location when the curing step is carried out to form the solid layer at that point in time. That is, in this example, the region 32 is provided by uncured substrate which is located in cured substrate which is providing a layer of the object 18.

In any event, once a region 32 of an appropriate size and shape has been formed, the robotic arm 22 is operated to locate an insert in the region 32. In the example shown, the robotic arm 22 picks an insert 24 from a rack 34 or other store of inserts 24 which is located near the container 12. The robotic arm 22 then operates to locate the region 32 and then places the insert 32 in the region 32, in a desired orientation. It will be understood that operation of the robotic arm 22 may be under computer control, and that one or more sensors, including for example proximity sensors and/or optical sensors, may be used to locate the region 32 and ensure that the insert 24 is correctly located in the region 32.

After the insert 24 has been placed in the region 32, one or more further layers of the object 18 are formed. These further layers are formed over the insert 24 such that the insert 24 is contained by the object 18.

An advantage of the region 32 being formed of an uncured portion of the substrate material is that when the insert 24 is placed in the region 32, the uncured portion of the substrate material can be at least partially forced or squeezed out, thus making a space in which the insert 24 can be located. This helps to locate the insert 24 accurately. The insert 24 can be forced down into the region 32 by the robotic arm 22 such that the insert 24 is not protruding from the space, above the current layer of substrate material. This means that there is no protrusion of the insert 24 which could otherwise obstruct the roller 20 or scraper or the like which is laying down or smoothing the next layer of the substrate material.

In powder bed fusion 3D printing and in vat photopolymerization 3D printing and the like, the object being formed can effectively float in the uncured power or liquid substrate as often the object is not fixed to the platform which is supporting the object during formation. Accordingly, in the present case, when the insert 24 is placed by the robotic arm 22 in the region 32 in the partly formed object 18, this can cause the object 18 to move within the second chamber 16. This can be accommodated and allowed for by monitoring the location of the object 18 during formation of the layers of the object 18, particularly when the insert 24 is located in the region 32, using for example proximity sensors and/or optical sensors. The light or heat source or the like which is used to cure the substrate can then be recalibrated and repositioned as necessary to allow for any movement of the object 18.

Also, in the case that the region 32 is formed of an uncured portion of the substrate material such that the substrate material is at least partially forced or squeezed out of the region 32 when the insert 24 is placed in the region 32, this can also cause movement of region 32 within the object 18. Again, this can be monitored, using for example proximity sensors and/or optical sensors or the like, and accommodated or allowed for when partially curing layers to form the uncured region 32 and/or when locating the insert 24.

If the region 32 is formed of an uncured portion of the substrate material, this may be achieved by not applying a light or heat source as the case may be at that part of the uncured substrate where the region 32 is to be formed. Alternatively or additionally, in the case that curing agents are applied to promote curing and/or to provide greater detail in the formed object, no curing agent or a smaller amount of curing agent may be provided at the part of the uncured substrate where the region 32 is to be formed. Optionally, in either case, after the insert 24 is located in the slot of channel formed by the region 32, a curing agent may be applied in the region around the insert 24 to promote curing of the uncured portion of the substrate around the insert 24.

The picking of the insert 24 from the rack 34 or other store and placing the insert in the region 32 by the robotic arm 22 is coordinated with the movement of the roller 32 which is spreading out the layers of uncured substrate in the second chamber 16. This is arranged to allow time for the robotic arm 22 to pick up and place the insert 24 and move out of the way before the roller 20 or the like moves over the second chamber 16 to transfer and/or spread out the next layer of substrate.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of printing a 3D object containing an insert using additive manufacturing processing of a substrate material, the method comprising:
using additive manufacturing processing of a substrate material, forming one or more layers of a 3D object from the substrate material, said layers being formed with a region for receiving an insert;
using a robotic arm, placing an insert into said region such that at least a portion of the insert is located in said region;
using additive manufacturing processing of the substrate material, forming one or more further layers of the 3D object, the further layers being formed over the insert such that the insert is contained by the 3D object.

2. A method according to claim 1, wherein said region is formed by depositing one or more layers of the substrate material in an uncured state and curing said one or more layers of the substrate material other than at said region, such that when the robotic arm places the insert in said region, said region is formed of the uncured portion of the substrate material.

3. A method according to claim 1 or claim 2, comprising detecting the location of said region prior to placing the insert into said region, and controlling the robotic arm to place the insert into said region based on the detected location of said region.

4. A method according to any of claims 1 to 3, wherein the robotic arm is controlled to pick the insert from a storage location, locate the insert over said region of the 3D object, and release the insert to place the insert in said region.

5. A method according to any of claims 1 to 4, wherein the robotic arm has an electromagnetic tip which is controllable to hold and release an insert of magnetic material.

6. A method according to any of claims 1 to 5, wherein the robotic arm has a gripper tip which is controllable to hold and release an insert.

7. A method according to any of claims 1 to 6, wherein the additive manufacturing processing of the substrate material uses vat photopolymerization in which the substrate material is a liquid photopolymer contained in a tank which is cured by a heat or light source to form the layers.

8. A method according to any of claims 1 to 6, wherein the additive manufacturing processing of the substrate material uses powder bed fusion in which the substrate material is a powder contained in a tank and which is fused by a heat or light source to form the layers.

9. A 3D printer for printing a 3D object containing an insert using additive manufacturing processing of a substrate material, the printer comprising:
a tank for holding a substrate material to be used in additive manufacturing printing a 3D object; and
a robotic arm constructed and arranged to be able to pick and place an insert;
the robotic arm being arranged to be controllable to pick an insert from a storage location and place the insert in said 3D object during printing of said 3D object using additive manufacturing processing of a substrate material contained in the tank in use;
wherein the 3D printer is configured to:
using additive manufacturing processing of a substrate material, form one or more layers of a 3D object from the substrate material, said layers being formed with a region for receiving an insert;
using the robotic arm, place an insert into said region such that at least a portion of the insert is located in said region; and
using additive manufacturing processing of the substrate material, form one or more further layers of the 3D object, the further layers being formed over the insert such that the insert is contained by the 3D object.

10. A 3D printer according to claim 9, wherein the 3D printer is configured to form said region by depositing one or more layers of the substrate material in an uncured state and curing said one or more layers of the substrate material other than at said region, such that when the robotic arm places the insert in said region, said region is formed of the uncured portion of the substrate material.

11. A 3D printer according to claim 9 or claim 10, comprising a location detector for detecting the location of said region prior to placing the insert into said region, the robotic arm being controlled to place the insert into said region based on the detected location of said region.

12. A 3D printer according to any of claims 9 to 11, wherein the robotic arm has an electromagnetic tip which is controllable to hold and release an insert of magnetic material.

13. A 3D printer according to any of claims 9 to 12, wherein the robotic arm has a gripper tip which is controllable to hold and release an insert.

14. A 3D printer according to any of claims claim 9 to 13, wherein the additive manufacturing processing of the substrate material uses vat photopolymerization in which the substrate material is a liquid photopolymer contained in a vat which is cured by a heat or light source.

15. A 3D printer according to any of claims claim 9 to 13, wherein the additive manufacturing processing of the substrate material uses powder bed fusion in which the substrate material is a powder contained in a vat which is fused by a heat or light source.
